# EUROPEAN PATENT APPLICATION

(11) **EP 4 480 928 A1**
(43) Date of publication of application: **25.12.2024**
(21) Application number: 23181068.0
(22) Date of filing: 22.06.2023
(51) Int. Cl.: C02F 1/48, C02F 1/28, B01J 20/24, B01J 20/10, B01J 20/02, B01J 20/30, C02F 101/30, C02F 103/14, C02F 103/28, C02F 103/30

(54) **METHOD FOR THE REMOVAL OF CATIONIC AND/OR ANIONIC DYES FROM WATER OR WASTEWATER USING MAGNETIC BIONANOCOMPOSITE PARTICLES**

(30) Priority: 19.06.2023 PT 2023118729
(71) Applicant: Universidade de Aveiro, 3810-193 Aveiro (PT)
(72) Inventor: SILVA, Ana, 3810-193 AVEIRO (PT); SOARES, Sofia, 3810-193 AVEIRO (PT); PEREIRA, Bárbara, 3810-193 AVEIRO (PT); TRINDADE, Tito, 3810-193 AVEIRO (PT)
(74) Representative: Couto, Cláudia

(57) **Abstract**

The present invention relates to a novel remediation method for the efficient removal of organic dyes from water or wastewater using magnetic bionanocomposite particles. These particles comprise a magnetic core particle coated with a siliceous hybrid material comprising silica and a cationic or anionic biopolymer. The method involves dispersing the particles in water or wastewater containing organic dyes and applying an external magnetic field to facilitate their separation and removal along with the adsorbed dyes. Furthermore, a recovery step is also provided for the regeneration of the magnetic bionanocomposite particles, enabling their use for consecutive adsorption/desorption cycles. The use of these particles offer a cost-effective and environmentally friendly solution for the remediation of water/wastewater contaminated with organic dyes, contributing to the preservation of water resources and environmental sustainability.

## Description

### Field of the Invention

The present invention relates to the field of wastewater treatment and specifically focuses on the use of magnetic bionanocomposite particles as adsorbents for the efficient removal, extraction, and recovery of cationic and anionic organic dyes in water or wastewater. Specifically, the invention pertains to a method using magnetic nanoparticles coated with siliceous shells enriched in cationic and anionic biopolymers, enabling the removal of dyes from water/wastewater containing multiple organic dyes and facilitating selective dye removal and recovery. The invention finds direct application in the treatment of water from textile printing and dyeing processes, which commonly contain cationic and anionic organic dyes.

### Background Art

Organic dyes are widely used in industries such as textile, leather, paper, and printing, among others. Unfortunately, the unregulated disposal of dye-containing effluents poses a significant threat to the environment and human health. As these dyes are often non-biodegradable and can persist in water bodies for long periods, they can disrupt aquatic ecosystems and contaminate drinking water sources. Besides potentially contributing to water pollution, these industries require large amounts of water to operate. The world faces a problem of water scarcity and increasing the reuse of remediated water is part of the solution. Remediated wastewater can be reused within the industrial processes or for irrigating crops or golf courses, for example. Increasing the reuse of remediated wastewater is a top priority area for the European Commission (Circular Economy Action Plan) and United Nations Sustainable Development Goal by 2030. To improve the sustainability and cost-effectiveness of wastewater remediation processes, the technology should not only remediate the water, but also enabling the recovery and reuse of solutes, such as organic dyes.

Existing treatment methods for dye-containing effluents encompass a range of approaches, including biological methods and advanced oxidation processes. However, these remediation techniques are not suitable for dye-recovery from wastewater as they promote the degradation of the organic dyes. Adsorption, on the other hand, is a promising technique for wastewater remediation due to the affordable cost, higher performance and easy implementation. Various solutions, such as activated carbon or fixed bed columns with different fillings, have been employed for adsorbing organic dyes. However, the separation of activated carbon by filtration or the application of pressure in fixed bed columns necessitates significant energy consumption. In contrast, magnetic sorbents can be easily and efficiently separated from the treated water using low-energy magnetic separation methods. Furthermore, adsorption is a nondestructive remediation approach, and the solutes can be potentially recovered from the sorbent material through desorption.

The remediation of wastewater containing organic dyes has been a subject of study, with the proposal of using magnetic sorbents. However, previous studies have primarily focused on single-component dye solutions or multi-dye solutions prepared in ultrapure or distilled water. For example, Huang et al (CN102976435B) described a method for removing dyes from water using magnetic microspheres functionalized with amino or carboxyl groups. However, in this patent (CN102976435B) only the removal of a single dye in water has been addressed and its applicability to waters with two or more dyes and to real effluents has not been demonstrated.

Zolgharnein, J et al "Simultaneous removal of Basic blue and Toluidine blue O dyes by Magnetic Fe3O4@polydopamine nanoparticle as an efficient adsorbent using derivative spectrophotometric determination and central composite design optimization", Inorganic Chemistry Communications 146 (2022) 110203 - demonstrate the dye removal in a binary mixture of cationic dyes, basic blue and toluidine blue O, prepared in tap water.

In a real context, wastewater and industrial effluents are complex mixtures that often contain various organic dyes of different chemical natures, including both cationic and anionic dyes, within an aqueous matrix of diverse composition.

To date, no efficient methods for the removal of dyes from wastewater, specifically those containing multiple dyes, through adsorption using magnetic adsorbents have been reported. Additionally, there is a lack of reported remediation techniques that facilitate the recovery of organic dyes from wastewater.

### Summary

The present application relates to a method for the removal of cationic and/or anionic dyes from water or wastewater comprising the following steps:
- Providing:
   - magnetic bionanocomposite particles comprising a magnetic core particle coated with a shell of a siliceous hybrid material comprising silica and a cationic biopolymer; or
   - magnetic bionanocomposite particles comprising a magnetic core particle coated with a shell of a siliceous hybrid material comprising silica and an anionic biopolymer; or
   - a formulation comprising a mixture of magnetic bionanocomposite particles comprising a magnetic core particle coated with a shell of a siliceous hybrid material comprising silica and a cationic biopolymer, and magnetic bionanocomposite particles comprising a magnetic core particle coated with a shell of a siliceous hybrid material comprising silica and an anionic biopolymer;
- Dispersing the magnetic bionanocomposite particles or formulation in water or wastewater containing cationic and/or anionic dyes in a range between 0.1 to 5.0 g/L of particles per water or wastewater;
- Contacting the magnetic bionanocomposite particles or formulation with the water or wastewater for a time between 1 minute to 48 hours;
- Applying an external magnetic field for a time between 1 and 10 minutes to facilitate the removal of the dyes from the water or wastewater;
- Separating and removing the magnetic bionanocomposite particles or formulation from the water or wastewater.

In one embodiment, the magnetic core particle is a magnetic iron oxide with an average particle size between 30-200 nm.

In one embodiment, the thickness of the siliceous hybrid shell is between 0.5 and 100 nm.

In one embodiment, the cationic biopolymer or anionic biopolymer are selected from polysaccharides or polysaccharide derivatives.

In one embodiment, the cationic biopolymer is trimethylchitosan and the anionic biopolymer is κ-carrageenan.

In one embodiment, the weight ratio percentage between cationic biopolymer-based magnetic bionanocomposite particles and anionic biopolymer-based magnetic bionanocomposite particles in the formulation ranges from 5:95 to 95:5.

In one embodiment, the external magnetic field of applied by means of a magnet or an electromagnet.

In one embodiment, the method further comprises a step of eluting the magnetic bionanocomposite particles or formulation, after being separated from the water or wastewater, at least once with a salt solution with a concentration ranging from 0.1 to 4.5 M to desorb the dyes adsorbed onto the magnetic bionanocomposite particles or formulation.

In one embodiment, the salt solution is selected from KCl, K₂CO₃, K₂SO₄, KNO₃ or NaCl.

### General Description

The present solution pertains to a method for the remediation and recovery of organic dyes from water or wastewaters through the application of an external magnetic field. Specifically, the invention involves the use of magnetic bionanocomposite particles for the adsorption-based separation of organic dyes from water/wastewater. These magnetic bionanocomposite particles can be prepared using cationic and anionic biopolymers. Cationic biopolymer-based magnetic bionanocomposite particles are employed for the removal of anionic dyes, while anionic biopolymer-based magnetic bionanocomposite particles are employed for the removal of cationic dyes.

The use of formulations comprising a combination of magnetic bionanocomposite particles prepared with anionic biopolymers and bionanocomposite particles prepared with cationic biopolymers is also contemplated as a mean to simultaneously remove both cationic and anionic organic dyes from water/wastewater. Additionally, this solution considers the desorption-based recovery of the organic dyes from the magnetic bionanocomposite particles.

The proposed remediation method using magnetic bionanocomposite particles offers several advantages over traditional dye removal techniques. Firstly, the magnetic nature of the sorbents allows for easy separation from the water/wastewater using an externally applied magnetic field, enabling efficient and convenient recovery of the adsorbed dyes. This eliminates the need for complex and time-consuming separation processes typically employed in other methods. Secondly, the use of bionanocomposite particles with a siliceous hybrid shell coated with a biopolymer provides active adsorption sites, enhancing the adsorption capacity and selectivity for different types of organic dyes. Additionally, the ability to tailor the surface charge of the magnetic bionanocomposite particles allows for specific removal of either anionic or cationic dyes or simultaneous removal of mixed dye compositions. Furthermore, the rapid decolorization achieved within short contact times, ranging from 1 to 30 minutes, offers an efficient and time-saving solution for dye removal. Lastly, a recovery step using mild elution conditions with a salt solution enables the effective extraction of the adsorbed dyes while maintaining the integrity of the magnetic sorbents, allowing for their regeneration and repeated use in consecutive adsorption/desorption cycles. Overall, this method provides a highly efficient, selective, and environmentally friendly approach for the remediation and recovery of organic dyes from water/wastewater.

### Brief Description of the Drawings

The following figures provide preferred embodiments for illustrating the description and should not be seen as limiting the scope of invention.
**Figure 1** shows a TEM image of KCRG-NP, the magnetic bionanocomposite particles prepared with κ-carrageenan.
**Figure 2** shows a TEM image of TMC-NP, the magnetic bionanocomposite particles prepared with trimethylchitosan.
**Figure 3** shows the dye removal percentage from single dye aqueous solutions using the magnetic bionanocomposite particles KCRG-NP and TMC-NP as sorbents, in the pH range 5-9. The initial dye concentration was 20 mg/L and the sorbent dose was 0.5 g/L.
**Figure 4** shows the photographs of the UP-water spiked with the dyes MB (10 mg/L) and MG (10 mg/L) before (0 min) and after remediation with KCRG-NP (dose 0.5 g/L) for 1 min to 1 hour.
**Figure 5** shows the UV-VIS spectra of the UP-water spiked with the dyes MB (10 mg/L) and MG (10 mg/L) before (0 min) and after remediation with KCRG-NP (dose 0.5 g/L) for 1 min to 1 hour.
**Figure 6** shows the photographs of the wastewater spiked with the dyes MB (10 mg/L) and MG (10 mg/L) before (0 min) and after remediation with KCRG-NP (dose 0.5 g/L) for 1 min to 1 hour.
**Figure 7** shows the UV-VIS spectra of the wastewater spiked with the dyes MB (10 mg/L) and MG (10 mg/L) before (0 min) and after remediation with KCRG-NP (dose 0.5 g/L) for 1 min to 1 hour.
**Figure 8** shows the photographs of the UP-water spiked with the dyes RB (10 mg/L) and RBBR (10 mg/L) before (0 min) and after remediation with TMC-NP (dose 0.5 g/L) for 1 min to 1 hour.
**Figure 9** shows the UV-VIS spectra of the UP-water spiked with the dyes RB (10 mg/L) and RBBR (10 mg/L) before (0 min) and after remediation with TMC-NP (dose 0.5 g/L) for 1 min to 1 hour.
**Figure 10** shows the photographs of the UP-water spiked with the dyes MB (10 mg/L) and RBBR (10 mg/L) after remediation with KCRG-NP and TMC-NP (50:50, dose 0.5 g/L) for 1 min to 1 hour.
**Figure 11** shows the UV-VIS spectra of the UP-water spiked with the dyes MB (10 mg/L) and RBBR (10 mg/L) before (0 min) and after remediation with KCRG-NP and TMC-NP (50:50, dose 0.5 g/L) for 1 min to 1 hour.
**Figure 12** shows the UV-VIS spectra of the wastewater spiked with the dyes MB (10 mg/L) and RBBR (10 mg/L) before (0 min) and after remediation with KCRG-NP and TMC-NP (50:50, dose 0.5 g/L) for 1 min to 1 hour.
**Figure 13** shows the photograph of the wastewater spiked with the dyes MB, MG, RB and RBBR before (0 min) and after 60 min remediation with KCRG-NP and TMC-NP (50:50, dose 2 g/L). The initial concentration of each dye was 10 mg/L.
**Figure 14** shows the UV-VIS spectra of the wastewater spiked with the dyes MB, MG, RB and RBBR before (0 min) and after 60 min remediation with KCRG-NP and TMC-NP (50:50, dose 2 g/L). The initial concentration of each dye was 10 mg/L.
**Figure 15** shows the ratio between the adsorption capacity (q) and the adsorption capacity after the first cycle (q1) for five consecutive adsorption/desorption cycles, in single-dye adsorption using KCRG-NP and TMC-NP. The initial concentration of each dye was 20 g/L, in UP water, at pH=7 and the sorbent dose was 0.5 g/L.

### Detailed Description

The present solution relates to remediation method for the removal and recovery of organic dyes from water or wastewater through adsorption using magnetic bionanocomposite particles. These particles can be easily separated from water or wastewater using an externally applied magnetic field.

The magnetic bionanocomposite particles used in the present invention are obtained according to the methods previously disclosed in PT108283 (B).

These magnetic bionanocomposite particles comprise a magnetic core particle coated with a shell of a siliceous hybrid material comprising silica and a biopolymer providing active adsorption sites.

The magnetic core particle can be any type of material that exhibits magnetic properties, preferentially a magnetic iron oxide having an average size range between 30-200 nm. In one embodiment, the magnetic core is magnetite (Fe₃O₄), having size range, preferably between 30-200 nm.

The thickness of the siliceous hybrid shell may be preferably between 0.5 and 100 nm, provided that the coated particles are magnetic and easily attracted by an external magnetic field. Preferably thickness of the siliceous hybrid shell is between 2 and 25 nm, most preferably between 3 and 15 nm.

The siliceous hybrid shell comprises a biopolymer polyelectrolyte, i.e., a polyanion (anionic biopolymer) or polycation (cationic biopolymer). In one embodiment, the biopolymer polyelectrolyte is selected from a polysaccharide or polysaccharide derivatives. In one embodiment, the polyanion κ-carrageenan and the polycation trimethylchitosan.

The surface of the magnetic bionanocomposite particles prepared using the anionic polyelectrolyte is negatively charged, while the surface of the particles prepared using the cationic polyelectrolyte is positively charged. These bionanocomposite particles display a saturation magnetization from 1 to 80 emu/g.

The present remediation solution uses the magnetic bionanocomposite particles as sorbents for the removal of the organic dyes from water or wastewater. Magnetic bionanocomposites particles with a positively charged surface are used to remove anionic dyes, while those with a negatively charged surface are used to remove cationic dyes.

In one embodiment, magnetic bionanocomposite particles prepared with trimethylchitosan (TMC-NP) can be employed to remove the anionic dyes such as Rose Bengal (RB) and Remazol Brilliant Blue R (RBBR), as well as mixtures of these dyes.

In one embodiment, magnetic bionanocomposite particles prepared with κ-carrageenan (KCRG-NP) can be employed for the removal of cationic dyes, including methylene blue (MB) and malachite green (MG), as well as mixtures thereof.

To address wastewater containing both cationic and anionic dyes, sorbent formulations comprising a mixture of cationic biopolymer-based magnetic bionanocomposite particles and anionic biopolymer-based magnetic bionanocomposite particles are also described herein.

In one embodiment, the weight ratio percentage between cationic biopolymer-based magnetic bionanocomposite particles and anionic biopolymer-based magnetic bionanocomposite particles in the formulation ranges from 5:95 to 95:5.

In one embodiment, a mixture of KCRG-NP and TMC-NP can be used, with the weight ratio adjusted based on the nature and concentration of the organic dyes in the wastewater.

Provided herein is a method for the removal of cationic and/or anionic dyes from water or wastewater comprising the following steps:
- Providing:
   - magnetic bionanocomposite particles comprising a magnetic core particle coated with a shell of a siliceous hybrid material comprising silica and a cationic biopolymer; or
   - magnetic bionanocomposite particles comprising a magnetic core particle coated with a shell of a siliceous hybrid material comprising silica and an anionic biopolymer; or
   - a formulation comprising a mixture of magnetic bionanocomposite particles comprising a magnetic core particle coated with a shell of a siliceous hybrid material comprising silica and a cationic biopolymer, and magnetic bionanocomposite particles comprising a magnetic core particle coated with a shell of a siliceous hybrid material comprising silica and an anionic biopolymer;
- Dispersing the magnetic bionanocomposite particles or formulation in water or wastewater containing cationic and/or anionic dyes in a range between 0.1 to 5.0 g/L of particles per water or wastewater;
- Contacting the magnetic bionanocomposite particles or formulation with the water or wastewater for a time between 1 minute to 48 hours;
- Applying an external magnetic field for a time between 1 and 10 minutes to facilitate the removal of the dyes from the water or wastewater;
- Separating and removing the magnetic bionanocomposite particles or formulation from the water or wastewater.

In one embodiment, the magnetic bionanocomposite particles are dispersed between 0.5 to 2 g/L of particles per water or wastewater.

In one embodiment, the contact time between the magnetic bionanocomposite particles and the water or wastewater is between 1 min and 1 hour.

The application of an external magnetic field to the magnetic bionanocomposite particles comprising the adsorbed organic dyes facilitates the removal of the dyes from the water or wastewater. In one embodiment, the external magnetic field of applied by means of a magnet or an electromagnet.

In one embodiment, after magnetic separation, the magnetic bionanocomposite particles or formulation are physically removed from the water or wastewater by any suitable means for the purpose.

### Non-limiting embodiments:

In one embodiment, this method employing KCRG-NP magnetic sorbents enabled rapid decolorization, 1-30 minutes, of water and wastewater contaminated with methylene blue (MB), malachite green (MG) or mixtures thereof, within a pH range 5-9. In ultra-pure water (UP-water) at pH 7, the maximum adsorption capacity was found to be 56.3 g MB per 100g of KCRG-NP and 88.4 g MG per 100g of KCRG-NP (Table 1). For a dose of 0.5 g/L of KCRG-NP added to wastewater containing 10 mg/L of both MB and MG, the remediation process resulted in the removal of 76 % of MB and 73 % of MG after 15 minutes, and 84 % of MB and 82 % MG after 1 hour. In UP-water, the same experiment led to the removal of 95 % of MB and 83 % of MG after 15 minutes.

In one embodiment, this method using TMC-NP magnetic sorbents provides rapid decolorization, 1-30 min, of water contaminated with Rose Bengal (RB), Remazol Brilliant Blue R (RBBR), or mixtures thereof, within a broad pH range 5-9. The maximum adsorption capacity in ultra-pure (UP) water at pH 7 was determined to be 77 g RB per 100 g of TMC-NP and 65.6 g RBBR per 100 g of TMC-NP (Table 1). For a dose of 0.5 g/L of TMC-NP added to water containing 10 mg/L of both RB and RBBR, the remediation process resulted in the removal of 80 % of RB and 73 % of RBBR after 5 minutes, and 99 % of RB and 90 % of RBBR after 1 hour.

In one embodiment, the rapid decolorization, 15 minutes, of water polluted with a mixture of the cationic dye MB and the anionic dye RBBR, a formulation containing 50:50 weight ratio of KCRG-NP and TMC-NP was employed. A dose of 0.5 g/L of this formulation added to water containing 10 mg/L of both MB and RBBR allowed for the removal of 89 % of MB and 81 % of RBBR. At a higher dose of 2.0 g/L, the same formulation effectively decolorized wastewater contaminated with a mixture of two cationic dyes, MB and MG, and two anionic dyes, RB and RBBR, each dye at an initial concentration of 10 mg/L.

**Table 1. Maximum adsorption capacity of KCRG-NP and TMC-NP for single dye removal, at pH 7, estimated through Langmuir isotherm fitting.**

| **Dye Pollutant** | **Magnetic sorbent** | **Maximum adsorption capacity (g/100 g sorbent)** |
|---|---|---|
| MB | KCRG-NP | 56.3 |
| MG | KCRG-NP | 88.4 |
| RB | TMC-NP | 77.0 |
| RBBR | TMC-NP | 65.6 |

The present solution also provides an additional step for the recovery of organic dyes from water or wastewater. The dyes adsorbed onto the magnetic bionanocomposite particles or formulation can be desorbed under mild conditions using a salt solution with a concentration ranging from 0.1 to 4.5 M, preferably 1 M. After removal of the magnetic bionanocomposite particles from the water or wastewater, they are eluted at least once with the salt solution.

In one embodiment, the salt solution is selected from, but not limited to KCl, K₂CO₃, K₂SO₄, KNO₃ or NaCl.

In one embodiment, KCRG-NP was used for the recovery of cationic dyes, while TMC-NP was used for the recovery of anionic dyes. Sequential addition and magnetic separation of KCRG-NP and TMC-NP from wastewater containing a mixture of MB (cationic dye) and RB (anionic dye), followed by elution with aqueous KCl 1 M, resulted in the recovery of 76 % of MB and 13 % of RB from the wastewater.

After elution with KCl and water, the magnetic biocomposite particles KCRG-NP and TMC-NP were regenerated and reused in consecutive adsorption/desorption cycles while retaining their ability for dye removal and extraction.

### Examples

The following examples are presented herein for illustration only and should not be construed as limiting the solution in any way.

### Example 1 - Preparation of the magnetic bionanocomposites

1 g of the dried polysaccharide κ-carrageenan or trimethylchitosan react with 1.3 mL of ICPTES (3-(triethoxysilyl) propyl isocyanate ((C₂H₅O) ₃Si (CH₂) ₃NCO) in 13 mL of dried N,N-dimethyformamide (DMF) at 100 °C, under stirring and N₂ atmosphere, for 24 h. The resulting modified polymer is washed in dried methanol and dried ethanol and dried at room temperature. For the preparation of the magnetite (Fe₃O₄) core nanoparticles, 1.9 g of KOH and 1.52 g of KNO₃ is added to 25 mL of deoxygenated water, heated at 60 °C with bubbling N₂ and mechanically stirred at 500 rpm. After salt dissolution, 25 mL of an aqueous solution containing 4.75 g of FeSO₄.7H₂O is added drop-by-drop and the stirring speed is increased to 700 rpm. After 30 minutes, the round flask is transferred to a hot oil bath (90 °C) and left under N₂ with no stirring for 4 hours. At the end, the obtained black powder is washed with deoxygenated water, separated magnetically and dried at room temperature. For preparing the magnetic sorbents, 40 mg of Fe₃O₄ nanoparticles are dispersed in 38 mL ethanol under sonication in an ice bath. After 15 min, 2.4 mL of NH₄OH 25 % and a mixture comprising 0.406 mL of tetraethylorthosilicate and 0.4 g of the modified polymer are slowly added to the solution and left under sonication for 2 h. The resulting bionanocomposite particles are collected using an external magnet, washed with ethanol and dried at room temperature to obtain the magnetic nanosorbents.

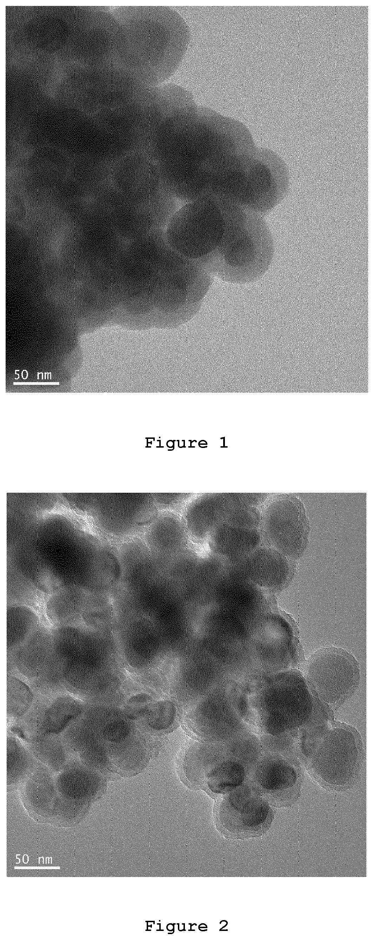

The prepared bionanocomposite particles contain a hybrid shell comprising silica and the biopolymers κ-carrageenan and trimethylchitosan as the adsorption active component, and Fe₃O₄ nanoparticles to impart magnetic properties to the sorbent material. The bionanocomposite particle diameter ranges from 65 to 75 nm **(****Figure 1** and **Figure 2****).**

The surface of magnetic sorbents prepared using κ-carrageenan is negatively charged at pH values above 2, and is rich in bound sulfonate groups. On the other hand, the surface of magnetic sorbents prepared using trimethylchitosan is positively charged in the pH range 2-8 and is rich in bound trimethylammonium groups. At pH 5-8 the surface charge, as indicated by zeta potential values, ranges from -38 to -43 mV for magnetic sorbents prepared using κ-carrageenan and from +25 to +15 mV for magnetic sorbents prepared using trimethylchitosan.

### Example 2- Remediation of water containing a single organic dye: pH dependency

This example illustrates the application of the bionanocomposite particles KCRG-NP and TMC-NP as magnetic sorbents in the removal of organic dye from single dye aqueous solutions at pH 5-9. The preparation of KCRG-NP and TMC-NP follows the procedure outlined above in Example 1. The magnetic bionanocomposite prepared with κ-carrageenan (KCRG-NP) is employed to remove the cationic dyes methylene blue (MB) and malachite green (MG), while TMC-NP, prepared with trimethylchitosan (TMC-NP) is used for removing the anionic dyes Rose Bengal (RB) and Remazol Brilliant Blue R (RBBR).

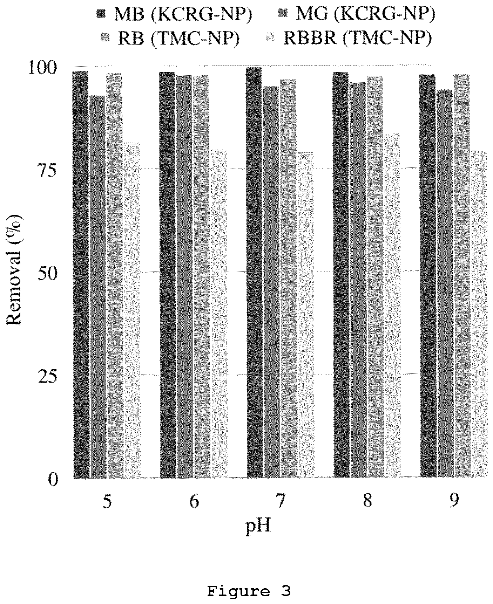

Single dye solutions are prepared by dissolving the respective organic dyes in UP water. The initial concentration of the dyes was 20 mg/L and the pH was adjusted within the range 5 to 9. A dose of 0.5 g/L of the magnetic sorbent was dispersed in 10 mL of the single dye solution. The suspension was then placed in a vertical rotator and shaken at a constant rotation speed of 30 rpm), at 25 °C, for 24 h, in the dark. At the end, the magnetic sorbents could be separated magnetically after 2 min using an external magnet. The final concentration of the organic dye was determined by the UV-VIS spectroscopy analysis of the supernatant. The dye removal, expressed in percentage, was calculated **(****Figure 3****).** In the pH range of 5-9, KCRG-NP exhibits excellent removal rates, achieving 98-99.5% removal for MB and 93-98% removal for MG. TMC-NP demonstrates effective removal of RB at a rate of 97-98%. For RBBR, TMC-NP achieves a removal rate of 79-83% across the pH range of 5-9, with the highest removal efficiency observed at pH 8.

### Example 3- Remediation of water containing single organic dye - maximum adsorption capacity

In this example the bionanocomposite particles were dispersed in single dye aqueous solutions prepared in UP-water at pH 7 with varying dye concentrations ranging from 10 to 650 mg/L. The remediation process was carried out for 24 hours using a sorbent dose of 0.5 g/L. The sorbent KCRG-NP was employed for the removal of MB and MG, while the sorbent TMC-NP was utilized for RB and RBBR removal. Subsequently, the magnetic sorbents were magnetically separated, and the final concentration of the organic dye was determined through UV-VIS spectroscopy analysis of the supernatant. The amount of dye adsorbed at equilibrium was calculated, and the maximum adsorption capacity (Table 1) was estimated by applying the Langmuir isotherm model.

### Example 4 - Remediation of water containing two cationic dyes

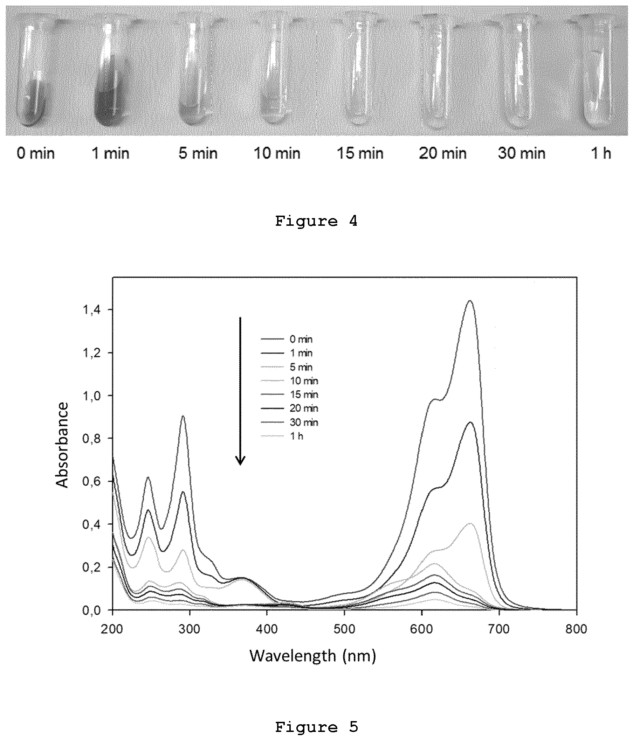

This example describes the application of the magnetic bionanocomposites prepared with κ-carrageenan (KCRG-NP) in the removal of a mixture of cationic dyes from UP water. The cationic dyes in question were MB and MG. To prepare a solution containing both MB and MG, the cationic dyes were dissolved in UP water at an initial concentration of 10 mg/L, with the pH set at 7. A dose of 0.5 g/L of the magnetic sorbent KCRG-NP was then dispersed in 10 mL of the UP water spiked with MB and MG. The suspension was subjected to continuous shaking in a vertical rotator at a fixed rotation speed of 30 rpm and a temperature of 25 °C. After a contact time, the magnetic sorbents were separated magnetically using an external magnet within 2 minutes. The color intensity of the water visibly decreased with increasing contact time, indicating effective dye removal by KCRG-NP **(****Figure 4****.** After 30 minutes of contact time, the water became colorless. To monitor the removal of MB and MG, the supernatant was analyzed using UV/VIS spectroscopy. The obtained spectra **(****Figure 5****)** demonstrated the decrease on the intensity of the characteristic peaks over time, indicating successful dye removal. More specifically, there is a decrease in the intensity of the band at 663 nm, ascribed to MB adsorption, and at 614 nm, ascribed to MG adsorption. Both MB and MG were effectively adsorbed by KCRG-NP. Based on the UV-VIS spectra analysis, the removal of MB and MG was 95% and 83% respectively, after 15 minutes, and further increased to 99 % and 94 % after 1 hour of remediation time.

### Example 5 - Remediation of wastewater containing two cationic dyes

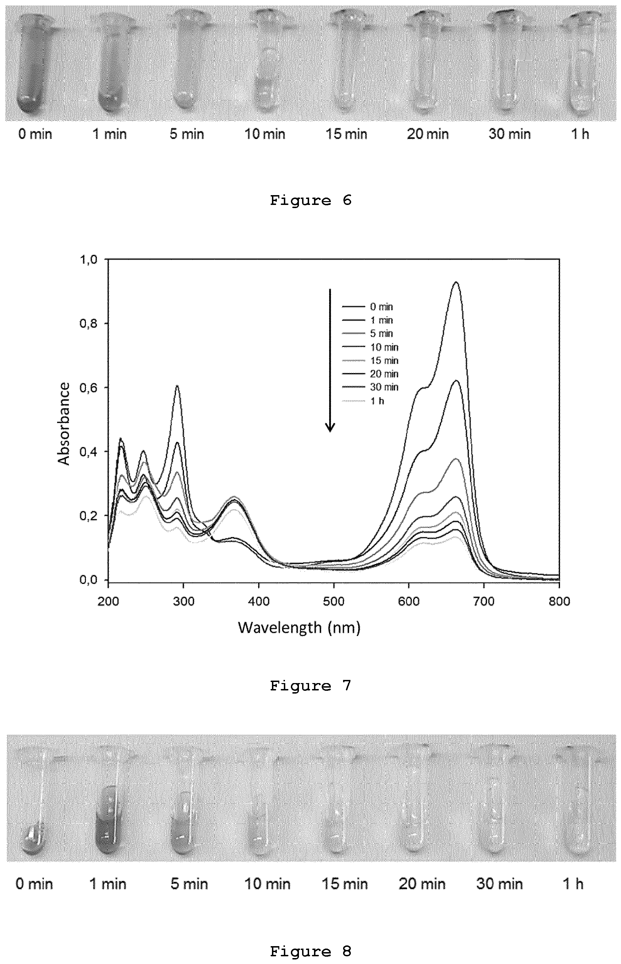

This example focuses on the application of magnetic bionanocomposites based on κ-carrageenan (KCRG-NP) for the treatment of wastewater containing a mixture of cationic dyes, namely methylene blue (MB) and malachite green (MG). To create solutions with both MB and MG, the cationic dyes were dissolved in real wastewater obtained from a sewage treatment plant after undergoing secondary treatment and thorough filtration using a 0.45 µm filter paper. The experiment employed magnetic sorbents KCRG-NP under the same conditions as described in example 4. Over time, a noticeable reduction in color intensity was observed, indicating effective dye removal from the wastewater by the nanoparticles **(****Figure 6****).** The UV-VIS spectra of the solutions **(****Figure 7****)** revealed a decrease in the intensity of the characteristic peaks at 614 nm and 663 nm, further confirming the removal of MB and MG. The calculated removal efficiencies based on UV-VIS spectra analysis were 76 % and 73 % for MB and MG, respectively, after 15 minutes, and increased to 84 % and 82 % after 1 hour of remediation time.

### Example 6 - Remediation of water containing two anionic dyes

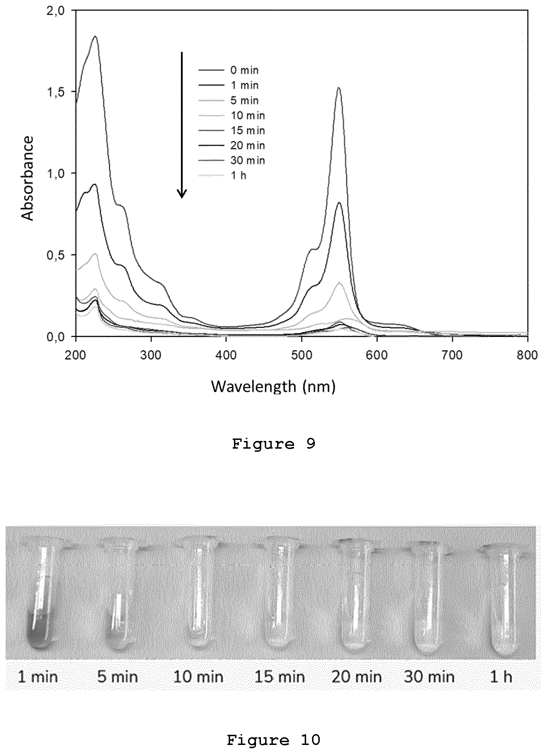

This example demonstrates the application of nanosorbents for the removal of a mixture of anionic dyes from ultra-pure (UP) water. The anionic dyes used in this study were rose bengal (RB) and Remazol Brilliant Blue R (RBBR). Solutions containing RB and RBBR were prepared by dissolving the anionic dyes in UP water, with an initial concentration of 10 mg/L and a pH of 7. Magnetic sorbents TMC-NP were dispersed in the UP water spiked with anionic dyes at a dosage of 0.5 g/L. The suspension was subjected to continuous shaking (30 rpm) in a vertical rotator at 25°C. The experiments were conducted using 10 mL of the solution, and the magnetic nanosorbents were separated from the solution within 2 minutes using an external magnet. **Figure 8** illustrates the decrease in color intensity over time, indicating the adsorption of the anionic dyes by the nanoparticles. The removal of the dyes was further confirmed through UV-VIS spectroscopy analysis **(****Figure 9****).** The decrease in the band's intensity peaked at 546 nm indicates the removal of RB, while the decrease observed at 231 nm indicates the removal of RBBR. The calculated removal percentages of RB and RBBR, based on UV-VIS spectra analysis, were 80% and 73% respectively, after 5 minutes of remediation time. After 1 hour, the removal percentages increased to 99% for RB and 90% for RBBR.

### Example 7 - Remediation of water containing a mixture of cationic and anionic dyes

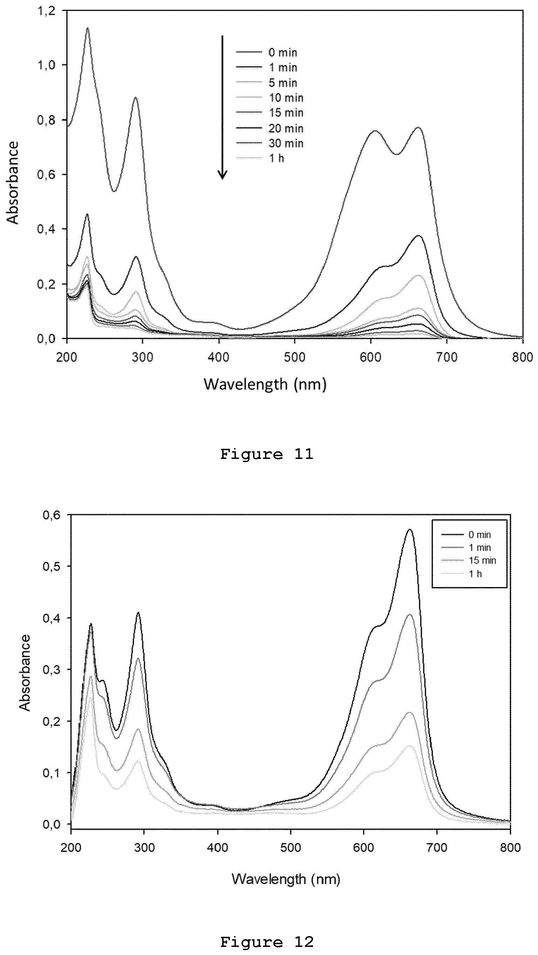

In this example, the application of the nanosorbents in the removal of a mixture of the cationic dye methylene blue (MB) with the anionic dye Remazol Brilliant Blue R (RBBR) from UP water is demonstrated. The initial concentration of MB and RBBR was 10 mg/L, with a pH of 7. A formulation comprising a 50:50 mixture of KCRG-NP and TMC-NP magnetic sorbents was employed at a dosage of 0.5 g/L for water remediation. As the contact time between the magnetic sorbents and the water increased, the intensity of the blue color diminished, eventually resulting in colorless water after 15 minutes, indicating successful dye removal. **(****Figure 10****)** The UV-VIS spectra exhibited a decrease in the intensity of the peak at 663 nm indicating MB removal, as well as a decrease in the intensity at 231 nm, indicating RBBR **(****Figure 11****).** The calculated removal percentages for MB and RBBR, based on UV-VIS spectra analysis, were 89 % and 81 % respectively, after 15 minutes, and increased to 98 % and 86 % after 1 hour of remediation.

Furthermore, attempts were made to remediate the water solely using KCRG-NP instead of the mixture of magnetic sorbents. However, employing only KCRG-NP resulted in less than 5 % removal of RBBR after 60 minutes. This comparison highlights the superior efficiency of using a mixture of KCRG-NP and TMC-NP in remediating water containing both cationic and anionic dyes.

### Example 8 - Remediation of wastewater containing a mixture of cationic and anionic dyes

In this example, the application of the magnetic bionanocomposites for removing a mixture of cationic dye methylene blue (MB) and anionic dye Remazol Brilliant Blue R (RBBR) from wastewater is described. The wastewater was collected following the procedure outlined in example 5. The initial concentration of each dye was 10 mg/L and the pH was 7. A formulation consisting of a 50:50 mixture of KCRG-NP and TMC-NP magnetic sorbents was employed for wastewater remediation at a dose of 0.5 g/L. Initially, the dye contaminated wastewater exhibited a blue color, and as the remediation process progressed, the intensity of the color gradually decreased. The UV-VIS spectra confirmed this trend, showing a reduction in the intensity of the peak at 663 nm, indicating the removal of MB, as well as a decrease in the intensity at 231 nm, signifying the removal of RBBR **(****Figure 12****).** The calculated removal percentages, based on UV-VIS spectra analysis, were 60 % for MB and 26 % for RBBR after 15 minutes of remediation. These removal rates increased to 71% for MB and 37% for RBBR after 1 hour of remediation time. It is important to note that the removal efficiency achieved in this example may vary based on the characteristics of the specific wastewater sample and the composition of the dyes present.

### Example 9 - Remediation of wastewater containing a mixture of two cationic and two anionic dyes

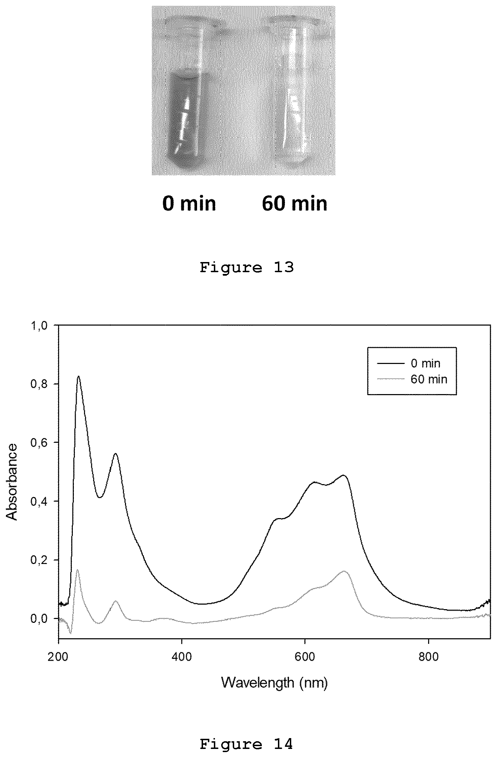

This example illustrates the application of the magnetic bionanocomposites in the removal of a mixture comprising two cationic dyes, Methylene Blue (MB) and Malachite Green (MG), and two anionic dyes, Rose Bengal (RB) and Remazol Brilliant Blue R (RBBR) from wastewater. Wastewater sampling was performed following the procedure outlined in example 5. The initial concentration of each dye was 10 mg/L and the pH was 7. To remediate the wastewater, a formulation of magnetic sorbents comprising a 50:50 mixture of KCRG-NPs and TMC-NPs was added at a dose of 2.0 g/L. Initially, the dyed wastewater exhibited a blue color. However, after 60 minutes of contact with the magnetic sorbents, a significant decrease in color intensity was observed **(****Figure 13****),** indicating successful removal of the dyes by the magnetic sorbents. This visual observation was further supported by UV/VIS spectra analysis of the wastewater before and after remediation **(****Figure 14****),** which displayed a notable decrease in the intensity of the peaks, confirming the removal of the dyes.

### Example 10 - Reusability of magnetic bionanocomposites in water remediation

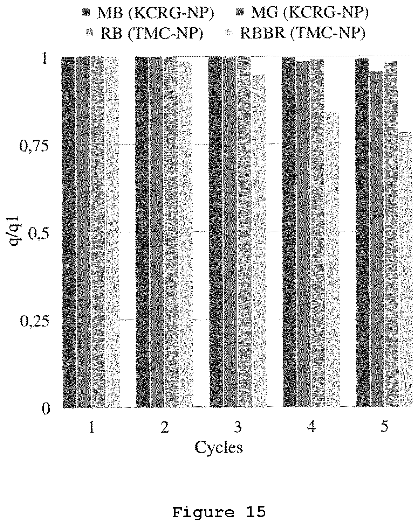

This example showcases the reusability of the magnetic sorbents KCRG-NP and TMC-NP in the removal of dyes. KCRG-NP was employed for the removal of MB and MG, while TMC-NP was employed for the removal of RB and RBBR. The initial concentration of the dye was 20 g/L, in UP water, at pH=7, with a sorbent dose of 0.5 g/L. The efficiency of removal was evaluated after a 24-hour contact time using UV-VIS spectroscopy. After adsorption, the magnetic sorbents were easily collected from the solution using a magnet, and a regeneration process was performed. The particles were washed sequentially with 1 M KCl solution, distilled water, and ethanol. Subsequently, the magnetic sorbents were dried at room temperature in preparation for reuse. To assess their reusability, the magnetic sorbents, namely KCRG-NP and TMC-NP, underwent five consecutive adsorption/desorption cycles **(****Figure 15****).** Remarkably, even after five cycles, the recycled particles retained their effectiveness in removing MB, MG, and RB, with a removal decrease of less than 5 %. Additionally, TMC-NP demonstrated its reusability for three cycles in RBBR removal, with a removal decrease also below 5 %. The successful reusability of the magnetic bionanocomposites described here highlights their potential as sustainable sorbents for water remediation, providing both efficient dye removal and cost-effective operation.

### Example 11 - Selective recovery of organic dyes from wastewater

This example demonstrates the use of magnetic bionanocomposites for the selective recovery of organic dyes from wastewater containing a mixture of dyes. Wastewater sampling was performed as described in example 5. The wastewater consisted of a mixture of the cationic dye MB and the anionic dye RB, with each dye at a concentration of 10 mg/L and pH 7. In the first stage, KCRG-NP sorbents were added to the wastewater at a dose of 2 g/L to uptake the cationic dye MB. The mixture was stirred for 1 hour at 30 rpm in a vertical rotator at 25 °C. The magnetic KCRG-NP sorbents were then separated magnetically. The MB adsorbed onto the KCRG-NP sorbents could be recovered by washing them with aqueous KCl. The amount of MB released into the KCl solution was monitored using UV-VIS spectroscopy. Two consecutive washing steps were performed using 1 M KCl at a ratio of 2.5 mL per mg of KCRG-NP. The recovery of MB from KCRG-NP was 67.4 % and 24.4 % in the first and second washing steps, respectively. This corresponds to the recovery of 91.8 % of the MB captured by KCRG-NP and 76 % of the MB initially present in the wastewater.

In the second stage TMN-NP sorbents were added to the wastewater previously treated with KCRG-NP for the extraction of the anionic dye RB. The operational conditions were the same as in the first stage. After 1 hour, the TMC-NP sorbents were magnetically separated and washed using 1M KCl at a ratio of 2.5 mL per mg of TMC-NP. The recovery of RB from TMC-NP was 20 %, corresponding to the recovery of 13 % of the RB initially present in the wastewater.

After the recovery of MB and RB, the magnetic sorbents KCRG-NP and TMC-NP could be reused in water and wastewater remediation, as described in example 10. This selective recovery process highlights the potential of magnetic bionanocomposites for efficient and targeted removal of specific organic dyes from wastewater, enabling their recovery and contributing to sustainable resource management.

## Claims

1. Method for the removal of cationic and/or anionic dyes from water or wastewater comprising the following steps:
- Providing:
- magnetic bionanocomposite particles comprising a magnetic core particle coated with a shell of a siliceous hybrid material comprising silica and a cationic biopolymer; or
- magnetic bionanocomposite particles comprising a magnetic core particle coated with a shell of a siliceous hybrid material comprising silica and an anionic biopolymer; or
- a formulation comprising a mixture of magnetic bionanocomposite particles comprising a magnetic core particle coated with a shell of a siliceous hybrid material comprising silica and a cationic biopolymer, and magnetic bionanocomposite particles comprising a magnetic core particle coated with a shell of a siliceous hybrid material comprising silica and an anionic biopolymer;
- Dispersing the magnetic bionanocomposite particles or formulation in water or wastewater containing cationic and/or anionic dyes in a range between 0.1 to 5.0 g/L of particles per water or wastewater;
- Contacting the magnetic bionanocomposite particles or formulation with the water or wastewater for a time between 1 minute to 48 hours;
- Applying an external magnetic field for a time between 1 and 10 minutes to facilitate the removal of the dyes from the water or wastewater;
- Separating and removing the magnetic bionanocomposite particles or formulation from the water or wastewater.

2. Method according to the previous claim, wherein the magnetic core particle is a magnetic iron oxide with an average particle size between 30-200 nm.

3. Method according to any of the previous claim, wherein the thickness of the siliceous hybrid shell is between 0.5 and 100 nm.

4. Method according to any of the previous claim, wherein the cationic biopolymer or anionic biopolymer are selected from polysaccharides or polysaccharide derivatives.

5. Method according to any of the previous claim, wherein the cationic biopolymer is trimethylchitosan and the anionic biopolymer is κ-carrageenan.

6. Method according to any of the previous claim, wherein the weight ratio percentage between cationic biopolymer-based magnetic bionanocomposite particles and anionic biopolymer-based magnetic bionanocomposite particles in the formulation ranges from 5:95 to 95:5.

7. Method according to any of the previous claim, wherein the external magnetic field of applied by means of a magnet or an electromagnet.

8. Method according to any of the previous claims, wherein it further comprises a step of eluting the magnetic bionanocomposite particles or formulation, after being separated from the water or wastewater, at least once with a salt solution with a concentration ranging from 0.1 to 4.5 M to desorb the dyes adsorbed onto the magnetic bionanocomposite particles or formulation.

9. Method according to any of the previous claims, wherein the salt solution is selected from KCl, K₂CO₃, K₂SO₄, KNO₃ or NaCl.
